# EUROPÄISCHE PATENTANMELDUNG

(11) **EP 1 496 062 A1**
(43) Veröffentlichungstag der Anmeldung: **12.01.2005**
(21) Anmeldenummer: 04102130.4
(22) Anmeldetag: 14.05.2004
(51) Int. Cl.: C07F 7/21, C08K 5/54, C09D 7/12

(54) **NCO-haltige Verbindungen mit kovalent gebundenen polyedrischen oligomeren Silizium-Sauerstoffcluster-Einheiten**

(30) Priorität: 11.07.2003 DE 10331787
(71) Anmelder: Degussa AG, 40474 Düsseldorf (DE)
(72) Erfinder: Spyrou, Emmanouil, Dr., 46282, Dorsten (DE); Schmidt, Friedrich Georg, Dr., 45721, Haltern am See (DE); Kühnle, Adolf, Dr., 45770, Marl (DE); Jost, Carsten, Dr., 45770, Marl (DE)

(57) **Zusammenfassung**

Die vorliegende Erfindung betrifft neue NCO-haltige Verbindung mit kovalent gebundenen polydrischen oligomeren Silizium-Sauerstoffclustereinheiten, geeignet als Vemetzer in Lacksystemen, die zu verbesserten Eigenschaften wie gutem Verlauf gehärteter Einbrennlacke führen oder/und eine gute Löslichkeit aufweisen.

## Beschreibung

Die vorliegende Erfmdung betrifft neue NCO-haltige Verbindung mit kovalent gebundenen polydrischen oligomeren Silizium-Sauerstoffclustereinheiten, geeignet als Vernetzer in Lacksystemen, insbesondere in wärmehärtenden Lacken, die zu verbesserten Eigenschaften wie gutem Verlauf gehärteter Einbrennlacke führen oder/und eine gute Löslichkeit aufweisen.

Polyisocyanate, blockiert oder nicht blockiert, und ihre Verwendung in Ein- und Zweikomponenten Polyurethansystemen sind bekannt. Sie verleihen Decklackierungen eine im Vergleich zu Aminoplastharz-vernetzenden Systemen signifikant verbesserte Beständigkeit gegen Umwelteinflüsse, insbes. sauren Regen. U. a. werden Polyisocyanate auch anteilig in Kombination mit Aminoplastharzen als Vernetzerkomponente in sogenannten "Hybridsystemen" eingesetzt. Blockierte Polyisocyanate besitzen ferner eine erhebliche Bedeutung im Bereich wärmehärtender Pulverlacke.

Im Gegensatz zu Polymeren, die über Einrichtungen mit hoher Scherkraft wie z. B. Extruder und Kneter verarbeitet werden, werden für die Lackherstellung häufig Rühr- und Mischeinrichtungen verwendet. Aufgrund der in diesem Fall geringeren Homogenisierwirkung und der Vielzahl an Einzelkomponenten kommt es somit zu Unverträglichkeiten in der Formulierung und insbesondere Oberflächenstörungen in der applizierten Lackoberfläche. Damit ist nicht nur das ästhetische Erscheinungsbild beeinträchtigt sondern es kann ebenfalls ein Abfall der mechanischen Eigenschaften entstehen.

Aufgabe war es, neue Verbindungen zu fmden, die als Vernetzter in Lacken zur Erzielung einer höheren Kratzbeständigkeit, Hydrophobierung und verbesserten Schmutzabweisung sowie Erhöhung der Glasübergangstemperatur (Tg) geeignet sind, ohne aber zu Unverträglichkeiten und Oberflächenstörungen zu führen.

Die Aufgabe wurde durch die neuen NCO-haltigen Verbindungen mit kovalent gebundenen polydrischen oligomeren Silizium-Sauerstoffclustereinheiten gelöst.

Gegenstand der Erfindung sind NCO-haltige Verbindungen mit kovalent gebundenen polyedrischen oligomeren Silizium-Sauerstoffclustereinheiten aufgebaut durch Reaktion aus den Ausgangskomponenten
A) mindestens ein aromatisches, aliphatisches und/oder cycloaliphatisches Polyisocyanat mit einer NCO-Funktionalität von 2 bis 6,
B) 0,001 bis 20,0 Gew,-% an polyedrischen oligomeren Silizium-Sauerstoffclustereinheiten mit mindestens einer gegenüber Isocyanatgruppen reaktiven funktionellen Gruppe, wobei 1 bis 20 Mol-% der ursprünglich vorhandenen freien Isocyanatgruppen des Polyisocyanates umgesetzt sind,
C) gegebenenfalls ein Blockierungsmittel, wobei 80 bis 99 Mol-% der ursprünglich vorhandenen freien Isocyanatgruppen des Polyisocyanates umgesetzt sind,
und die molaren Anteile der umgesetzten Isocyanatgruppen sich auf 100 % addieren.

Das Polyisocyanat der Komponente A) basiert auf Hexamethylendiisocyanat (HDI), Isophorondiisocyanat (IPDI), Bis-(4-isocyanatocyclohexyl)methan, (H₁₂-MDI), Tetramethylxylylendiisocyanat (TMXDI), 1,3-Bis(isocyanatomethyl)cyclohexan (1,3-H-XDI), 2,2,4- und 2,4,4-Trimethyl-1,6-diisocyanatohexan (TMDI), 2-Methylpentendiisocyanat-1,5 (MPDI), Norbornyldiisocyanat (NBDI), Lysintriisocyanat (LTI) oder 4-Isocyanatomethyl-1,8-octamethylendiisocyanat (NTI), 2,4-Diisocyanatomethylbenzen (2,4-TDI), 2,6 Diisocyanatomethylbenzen (2,6-TDI), Diphenylmethandiisocyanat oder Gemischen dieser Diisocyanate und weist eine mittlere NCO-Funktionalität von 2,0 - 6,0 auf.

Im Falle einer Funktionalität von größer zwei werden vorzugsweise Polyisocyanate - allein oder in Mischungen - wie sie durch Trimerisierung, Dimerisierung, Urethan-, Biuret- oder Allophanatbildung hergestellt werden sowie auch Abmischungen dieser mit Monomeren, verwendet. Derartige Polyisocyanate oder Polyisocyanat/Monomer-Gemische können gegebenenfalls mit Di- oder polyfunktionellen, H-aciden Komponenten wie z. B. Di- oder Polyolen und/oder Di- oder Polyaminen, zusätzlich kettenverlängert oder verzweigt werden.

Bevorzugt basiert die Komponente A) auf IPDI und/oder HDI, insbesondere auf Isocyanurate dieser Diisocyanate.

Unter dem als Komponente B) erfindungsgemäß eingesetzten polyedrischen oligomeren Silizium-Sauerstoffcluster werden vorzugsweise die beiden Verbindungsklassen der Silasesquioxane und der Sphärosilikate verstanden.

Silasesquioxane sind oligomere oder polymere Stoffe, deren vollständig kondensierte Vertreter die allgemeinen Formel (SiO_{3/2}R)n besitzen, wobei n > 4 und der Rest R ein Wasserstoffatom sein kann, meist jedoch einen organischen Rest darstellt. Die kleinste Struktur eines Silasesquioxans ist der Tetraeder. Voronkov und Lavrent'yev (Top. Curr. Chem. 102 (1982), 199-236) beschreiben die Synthese von vollständig kondensierten und unvollständig kondensierten oligomeren Silasesquioxanen durch hydrolytische Kondensation trifunktioneller RSiY₃-Vorstufen, wobei R für einen Kohlenwasserstoffrest steht und Y eine hydrolisierbare Gruppe, wie z. B. Chlorid, Alkoxid oder Siloxid, darstellt. Lichtenhan et al. beschreiben die basenkatalysierte Herstellung von oligomeren Silasesquioxanen (WO 01/10871). Silasesquioxane der Formel R₈Si₈O₁₂ (mit gleichen oder unterschiedlichen Kohlenwasserstoffresten R) können basenkatalysiert zu funktionalisierten, unvollständig kondensierten Silasesquioxanen, wie z. B. R₇Si₇O₉(OH)₃ oder auch R₈Si₈O₁₁(OH)₂ und R₈Si₈O₁₀(OH)₄, umgesetzt werden (Chem. Commun. (1999), 2309-10; Polym. Mater. Sci. Eng. 82 (2000), 301-2; WO 01/10871) und damit als Stammverbindung für eine Vielzahlverschiedener unvollständig kondensierter und funktionalisierter Silasesquioxane dienen. Insbesondere die Silasesquioxane (Trisilanole) der Formel R₇Si₇O₉(OH)₃ lassen sich durch Umsetzung mit funktionalisierten, monomeren Silanen (corner capping) in entsprechend modifizierte oligomere Silasesquioxane überführen.

Oligomere Sphärosilikate sind ähnlich aufgebaut wie die oligomeren Silasesquioxane. Auch sie besitzen eine "käfigartige" Struktur. Im Unterschied zu den Silasesquioxanen, bedingt durch ihre Herstellungsmethode, sind die Siliziumatome an den Ecken eines Sphärosilikates mit einem weiteren Sauerstoffatom verbunden, welches wiederum weiter substituiert ist. Oligomere Sphärosilikate lassen sich durch Silylierung geeigneter Silikat-Vorstufen herstellen (D. Hoebbel, W. Wieker, Z. Anorg. Allg. Chem. **384** (1971), 43-52; P. A. Agaskar, Colloids Surf. **63** (1992), 131-8; P. G. Harrison, R. Kannengiesser, C. J. Hall, J. Main Group Met. Chem. **20** (1997), 137-141; R. Weidner, Zeller, B. Deubzer, V. Frey, Ger. Offen. (1990), DE 38 37 397). So kann beispielsweise das Sphärosilikat mit der Struktur **2** aus der Silikat-Vorstufe der Struktur **1** synthetisiert werden, welche ihrerseits über die Umsetzung von Si(OEt)₄ mit Cholinsilikat bzw. durch die Umsetzung von Abfallprodukten der Reisernte mit Tetramethylammoniumhydroxid zugänglich ist (R. M. Laine, I. Hasegawa, C. Brick, J. Kampf, Abstracts of Papers, 222nd ACS National Meeting, Chicago, IL, United States, August 26-30, 2001, MTLS-018).

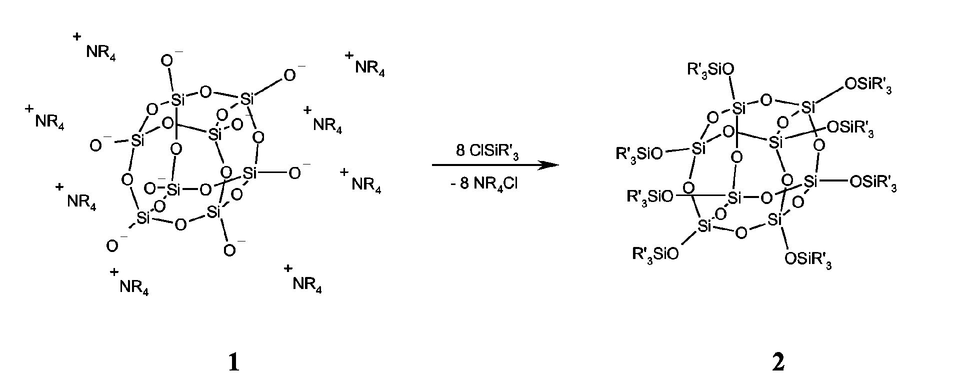

Sowohl die Silasesquioxane als auch die Sphärosilikate sind bei Temperaturen bis zu mehreren hundert Grad Celsius thermisch stabil.

Erfmdungsgemäß werden als Komponente B) eingesetzt eine polyedrische oligomere Silizium-Sauerstoffclustereinheit, gemäß der Formel

[(RₐX_{b}SiO_{1,5})ₘ (R_{c}X_{d}SiO)ₙ (RₑX_{f}Si₂O_{2,5})ₒ (R_{g}XₕSi₂O₂)ₚ]

mit:
a, b, c = 0-1; d = 1-2; e, f, g = 0-3; h = 1-4; m+n+o+p ≥ 4; a+b = 1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ **X** aufweisenden Substituenten vom Typ **R**,
wobei sowohl die Substituenten vom Typ **R** gleich oder unterschiedlich sind als auch die Substituenten vom Typ **X** gleich oder unterschiedlich sind.

Aufgrund ihres molekularen Charakters besitzen die polyedrischen oligomeren Silizium-Sauerstoffcluster ein einheitliches und definiertes Molekulargewicht. In einer besonderen Ausführungsform des erfindungsgemäßen Masterbatches weist die polyedrische oligomere Silizium-Sauerstoffclustereinheit bevorzugt ein Molekulargewicht von mindestens 400 g/mol, besonders bevorzugt 400 bis 2500 g/mol und ganz besonders bevorzugt 600 bis 1500 g/mol auf.

Die polyedrischen oligomeren Silizium-Sauerstoffcluster weisen eine Größe von maximal 100 nm, bevorzugt von maximal 50 nm, besonders bevorzugt von maximal 30 nm und ganz besonders bevorzugt von maximal 20 nm auf.

Es kann vorteilhaft sein, wenn die erfindungsgemäße polyedrische oligomere Silizium-Sauerstoffclustereinheit auf der Struktur **3** basiert 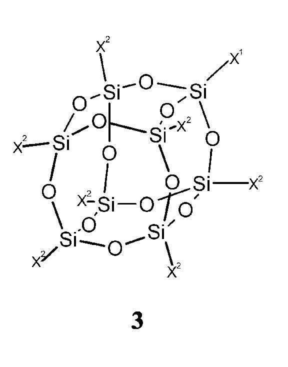 mit **X**^{**1**} = Substituent vom Typ **X** oder vom Typ **-O-SiX**_{**3**}**, X**^{**2**} = Substituent vom Typ **X**, vom Typ **-O-SiX**_{**3**}**,** vom Typ **R**, vom Typ **-O-SiX**_{**2**}**R,** vom Typ **-O-SiXR**_{**2**} oder vom Typ **-O-SiR**_{**3**}**.**

Die als Komponente B) eingesetzte polyedrische oligomere Silizium-Sauerstoffclustereinheit ist vorzugsweise funktionalisiert, insbesondere stellt die polyedrische oligomere Silizium-Sauerstoffclustereinheit eine Sphärosilikateinheit gemäß der Formel

[(RₑX_{f}Si₂O_{2,5})ₒ (R_{g}XₕSi₂O₂)ₚ]

mit e, f, g = 0-3; h = 1-4; o+p ≥ 4; e+f = 3 und g+h = 4, vorzugsweise jedoch eine funktionalisierte oligomere Sphärosilikateinheit, bevorzugt jedoch eine Silasesquioxaneinheit gemäß der Formel

[(RₐX_{b}SiO_{1,5})ₘ (R_{c}X_{d}SiO)ₙ]

mit a, b, c = 0-1; d = 1-2; m+n ≥ 4; a+b = 1; c+d = 2. besonders bevorzugt jedoch eine funktionalisierte oligomere Silasesquioxaneinheit dar. Ganz besonders bevorzugt sind Silizium-Sauerstoffclustereinheiten, die auf einer oligomeren Silasesquioxaneinheit gemäß den Strukturen **4, 5** oder **6** basieren, 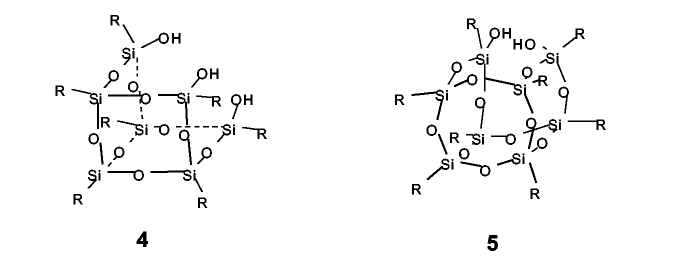 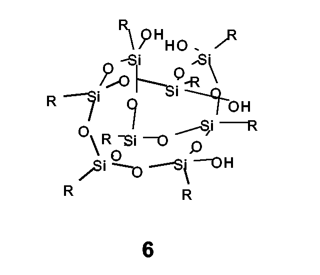 mit **R** = Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte oligomere Silasesquioxaneinheiten, die über eine Polymereinheit oder eine Brückeneinheit angebunden sind.

Die funktionalisierte oligomere Silasesquioxaneinheit kann durch die Umsetzung von Silasesquioxanen mit freien Hydroxy-Gruppen mit monomeren funktionalisierten Silanen der Struktur **Y**_{**3**}**Si-X**^{**1**}**, Y**_{**2**}**SiX**^{**1**}**X**^{**2**} und **YSiX**^{**1**}**X**^{**2**}**X**^{**3**} erhalten werden, wobei der Substituent **Y** eine Abgangsgruppe ist, ausgewählt aus Alkoxy-, Carboxy-, Halogen-, Silyloxy- oder Aminogruppe, die Substituenten **X**^{**1**}**, X**^{**2**} und **X**^{**3**} vom Typ **X** sind und gleich oder unterschiedlich sind, mit **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierter Isocyanat-, Acrylat-, Methacrylat-, Nitril-, Amino-, Phosphin-, Polyethergruppe oder mindestens eine solche Gruppe vom Typ **X** aufweisenden Substituenten vom Typ **R** und **R** = Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte oligomere Silasesquioxaneinheiten, die über eine Polymereinheit oder eine Brückeneinheit angebunden sind.

Die Substituenten vom Typ **R** der Silasesquioxans können alle identisch sein, daraus ergibt sich eine sogenannte funktionalisierte homoleptische Struktur gemäß

[(RSiO_{1,5})ₘ (RXSiO)ₙ]

mit m + n = z und z ≥ 4, wobei z der Anzahl der Siliziumatome in der Gerüststruktur der polyedrischen oligomeren Silizium-Sauerstoffclustereinheit entspricht und
- **R** =: Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ **X** aufweisenden Substituenten vom Typ **R**, wobei sowohl die Substituenten vom Typ **R** gleich oder unterschiedlich sind als auch die Substituenten vom Typ **X** gleich oder unterschiedlich sind.

In einer weiteren Ausführungsform können mindestens zwei der Substituenten vom Typ **R** der polyedrischen oligomeren Silasesquioxaneinheit verschieden sein, man spricht dann von einer funktionalisierten heteroleptischen Struktur gemäß

[(RSiO_{1,5})ₘ (R'XSiO)ₙ]

mit m + n = z und z ≥ 4, wobei z der Anzahl der Siliziumatome in der Gerüststruktur der polyedrischen oligomeren Silizium-Sauerstoffclustereinheit entspricht und
- **R≠R'** =: Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
- **X** =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ **X** aufweisenden Substituenten vom Typ **R,** wobei sowohl die Substituenten vom Typ **R** gleich oder unterschiedlich sind als auch die Substituenten vom Typ **X** gleich oder unterschiedlich sind.

Es kann ganz besonders vorteilhaft sein, wenn die polyedrische oligomere Silizium-Sauerstoffclustereinheit der erfindungsgemäßen Komponente B) maximal einen Substituenten vom Typ **X** aufweist. Insbesondere kann auf diese Weise verhindert werden, dass es zu Vernetzungen zwischen den polyedrischen oligomeren Silizium-Sauerstoffcluster untereinander kommt.

Ganz besonders bevorzugt weist die erfindungsgemäße Komponente B) funktionalisierte oligomere Silasesquioxane der Formel 7 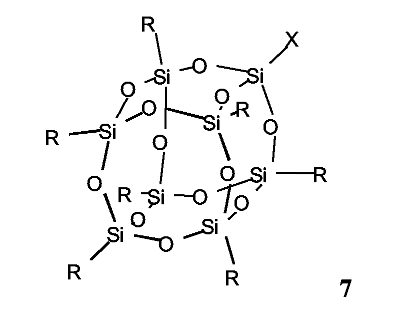 auf.

Als Blockierungsmittel C) sind in der Polyurethan-Technologie bekannte Blockierungsmittel wie Ketoxime, Aldoxime, 1,2,4-Triazole, auch in substituierter Form, Pyrazole, auch in substituierter Form, insbesondere 3,5-Dimethylpyrazol, Lactame, insbes. ε-Caprolactam, CH-acide Blockierungsmittel aus der Gruppe der Malonsäureester oder Acetessigsäureester, Phenole, substituierten Phenole, sekundäre Amine, insbes. sterisch gehinderte Amine wie Diisopropylamin oder C1-C10-Monoalkoholen geeignet. Diese Blockierungsmittel können in reiner Form, aber auch als Gemische zur Herstellung der erfindungsgemäßen silanmodifiziertenVernetzer eingesetzt werden. Bevorzugt werden Oxime, Caprolactam, 3,5-Dimethylpyrazol oder 1,2,4-Triazol und sek. Amine.

Die Herstellung der erfindungsgemäßen NCO-haltigen Verbindungen mit kovalent gebundenen polydrischen oligomeren Silizium-Sauerstoffclustereinheiten erfolgt in der Regel durch Modifizierung von Polyisocyanaten.

Im Falle der blockierten Systeme kann die Modifizierung der Polyisocyanate sukzessive in Form einer Umsetzung mit der polyedrischen oligomeren Silizium-Sauerstoffclustereinheit und anschließender Blockierung aber auch als Blockierung mit anschließender Umsetzung mit der polyedrischen oligomeren Silizium-Sauerstoffclustereinheit vorgenommen werden. Weniger bevorzugt, jedoch im Sinne der Erfindung ist die Umsetzung von Polyisocyanat mit einem Gemisch aus der polyedrischen oligomeren Silizium-Sauerstoffclustereinheit und Blockierungsmittel. Besonders bevorzugtes Verfahren ist es, zunächst das Polyisocyanat zu blockieren und anschließend mit der polyedrischen oligomeren Silizium-Sauerstoffclustereinheit umzusetzen.

Die Herstellung kann im Lösemittel erfolgen, wobei diese bevorzugt nicht-protisch und wasserfrei sind. Lösemittelfreie Herstellverfahren sind bei entsprechender Viskositätslage der Produkte in einer Rührreaktorfahrweise geeignet, bei höherer Viskosität der Produkte bietet sich die kontinuierliche Herstellung im Reaktionsextruder an.

Die Herstellung der erfindungsgemäßen NCO-haltigen Verbindungen mit kovalent gebundenen polydrischen oligomeren Silizium-Sauerstoffclustereinheiten erfolgt im Temperaturbereich von 20 °C bis 200 °C, bevorzugt 20 bis 150 °C.

Zur gegebenenfalls notwendigen Beschleunigung der Reaktion können auch in der PUR-Technologie übliche Katalysatoren aus der Gruppe der Sn(II)-, Sn(IV), Zn(II)- Bi-Verbindungen oder tertiäre Amine oder Kombinationen aus Metallkatalysator und tert. Amin verwendet werden.

Die Produkte können in reiner Form flüssig oder fest anfallen und ggf. für Flüssiglackanwendungen in organischen Lösemitteln gelöst sein.

Die erfindungsgemäßen NCO-haltigen Verbindungen mit kovalent gebundenen polyedrischen oligomeren Silizium-Sauerstoffclusstereinheiten können nach geeigneter Modifikation auch für strahlenhärtende, nicht pulverförmige Formulierungen verwendet werden. Dazu werden besagte erfindungsgemäße Verbindungen teilweise oder vollständig mit Stoffen umgesetzt, die sowohl über eine gegenüber NCO-Gruppen reaktive Einheit verfügt als auch eine Funktionalität enthält, die radikalisch oder kationisch polymerisiert werden kann. Beispiele für solche Verbindungen sind Hydroxyethylacrylat oder -methacrylat, Hydroxypropylacrylat oder - methacrylat und Hydroxybutylacrylat oder -methacrylat.

Ohne Weiteres möglich ist es auch, die beiden Teilschritte, Funktionalisierung mit polyedrischen oligomeren Silizium-Sauerstoffclustereinheiten und Funktionalisierung mit strahlenhärtbaren Substanzen in ihrer Reihenfolge zu vertauschen. Die Verwendung von NCO-haltigen Substanzen als Bestandteil für strahlenhärtbare Urethanacrylate ist in der Literatur vielfältig beschrieben z. B. in DE 197 41 781.

Die Umsetzung der erfmdungsgemäßen NCO-haltigen Verbindungen mit kovalent gebundenen polyedrischen oligomeren Silizium-Sauerstoffclustereinheiten mit besagten strahlenhärtbaren Substanzen erfolgt im Temperaturbereich von 20 °C bis 200 °C, bevorzugt 20 bis 150 °C.

Zur gegebenenfalls notwendigen Beschleunigung der Reaktion können auch in der PUR-Technologie übliche Katalysatoren aus der Gruppe der Sn(II)-, Sn(IV), Zn(II)- Bi-Verbindungen oder tertiäre Amine oder Kombinationen aus Metallkatalysator und tert. Amin verwendet werden.

Diese strahlenhärtbaren und kovalent gebundene polyedrischen oligomeren Silizium-Sauerstoffclusstereinheiten enthaltende Substanzen können in Reinsubstanz oder im Gemisch mit anderen strahlenhärtbaren Verbindungen und in Anwesenheit von Photoinitiatoren unter dem Einfluss von UV-Strahlung ausgehärtet werden. Eine mögliche Variante besteht in der Aushärtung mit Hilfe von Elektronenstrahlen, wobei hier kein Zusatz von Photoinitiatoren notwendig ist. Strahlenhärtbare Zubereitung und ihre Aushärtung ist in der Patentliteratur schon häufig beschrieben worden z. B. in DE 197 39 970.

Die erfindungsgemäßen NCO-haltigen Verbindungen mit kovalent gebundenen polyedrischen oligomeren Silizium-Sauerstoffclusstereinheiten werden insbesondere in Lacken, verwendet. Diese können entweder bei Raumtemperatur, durch Einwirkung von Wärme, Luftfeuchtigkeit oder Strahlen ausgehärtet werden. Solche Formulierungen setzen sich im Wesentlichen aus Vernetzer- und Polyolkomponente, Additiven, ggf. Lösemitteln und organischen oder anorganischen Farbpigmenten, Füllstoffen oder Farbstoffen zusammen.

Gegenstand der Erfindung ist auch die Verwendung von NCO-haltigen Verbindungen mit kovalent gebundenen polyedrischen oligomeren Silizium-Sauerstoffclustereinheiten aufgebaut durch Reaktion aus den Ausgangskomponenten
A) mindestens ein aromatisches, aliphatisches und/oder cycloaliphatisches Polyisocyanat mit einer NCO-Funktionalität von 2 bis 6,
B) 0,001 bis 20,0 Gew,-% an polyedrischen oligomeren Silizium-Sauerstoffclustereinheiten mit mindestens einer gegenüber Isocyanatgruppen reaktiven funktionellen Gruppe, wobei 1 bis 20 Mol-% der ursprünglich vorhandenen freien Isocyanatgruppen des Polyisocyanates umgesetzt sind,
C) gegebenenfalls ein Blockierungsmittel, wobei 80 bis 99 Mol-% der ursprünglich vorhandenen freien Isocyanatgruppen des Polyisocyanates umgesetzt sind,
und die molaren Anteile der umgesetzten Isocyanatgruppen sich auf 100 % addieren, zur Herstellung von Lacken, insbesondere von wärmehärtbaren, feuchtigkeits- und strahlenhärtbaren Lacken.

Gegenstand sind demnach auch Lackeim Wesentlichen enthaltend mindestens eine Polyolkomponente und die erfmdungsgemäßen NCO-haltigen Verbindungen mit kovalent gebundenen polyedrischen oligomeren Silizium-Sauerstoffclustereinheiten als Vernetzer sowie die Beschichtungen, hergestellt aus den Lacken.

Dabei kann das erfindungsgemäße mit der polyedrischen oligomeren Silizium-Sauerstoffclustereinheit modifizierte Polyisocyanat die alleinige Vernetzerkomponente der Einbrennlackierung stellen oder in Kombination mit anderen Vernetzern für hydroxylhaltige Lackharze in wärmehärtende Beschichtungen eingesetzt werden z. B. aus den Gruppen der blockierten Polyisocyanate, der Aminoharze wie Melaminharze, Benzoguanaminharze, Glykolurilharze oder Harnstoffharze (J. Ott in: Stoye-Freitag, Lackharze, Carl-Hanser-Verlag, 1996, S. 104 ff.), oder auch aus der Gruppe der Triazincarbamate wie z. B. in US-P 5084541 beschrieben. Dabei stellt das mit der polyedrischen oligomeren Silizium-Sauerstoffclustereinheit modifizierte (eventuell blockierte) Polyisocyanat 10 bis 100 Gew.-Teile der Vernetzer, bezogen auf nicht flüchtige Bestandteile.

Als zu vernetzende Poylolkomponenten sind (Meth-)acryl-Copolymerisate, Polyesterpolyole, urethan- und estergruppenhaltige Polyole, Polyetherpolyole und/oder Polycarbonatdiole geeignet.

Als hydroxylgruppenhaltige (Meth)acryl-Copolymerisate können Harze mit einer Monomerzusammensetzung, wie sie z. B. in WO 93/15849 (S. 8, Zeile 25 bis S. 10, Zeile 5), oder auch in DE 195 29124 beschrieben sind, verwendet werden. Dabei sollte die durch anteilige Verwendung von (Meth)acrylsäure als Monomer einzustellende Säurezahl des (Meth)acryl-Copolymerisates 0-30, vorzugsweise 3-15 betragen. Das zahlenmittlere Molgewicht (ermittelt durch Gelpermeationschromatographie gegen einen Polystyrolstandard) des (Meth)acryl-Copolymerisates beträgt vorzugsweise 2000 bis 20000 g/mol, die Glasübergangstemperatur beträgt vorzugsweise -40 °C bis +60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 bis 250 mg KOH/g, besonders bevorzugt 90 bis 190 mg KOH/g.

Erfmdungsgemäß geeignete Polyesterpolyole sind Harze mit einer Monomerzusammensetzung aus Di- und Polycarbonsäuren und Di- und Polyolen, wie sie z. B. in Stoye/Freitag, Lackharze, C. Hanser Verlag, 1996, S. 49 oder auch in WO 93/15849 beschrieben sind. Als Polyesterpolyole können auch Polyadditionsprodukte von Caprolacton and niedermolekulare Di- und Triole, wie z. B. unter der Bezeichnung TONE (Union Carbide Corp.) oder CAPA (Solvay/Interox) erhältlich, eingesetzt werden. Das rechnerisch bestimmte zahlenmittlere Molgewicht beträgt vorzugsweise 500 bis 5000 g/mol, besonders bevorzugt 800 bis 3000 g/mol, die mittlere Funktionalität 2,0 bis 4,0, bevorzugt 2,0 bis 3,5.

Als erfindungsgemäß zu verwendende urethan- und estergruppenhaltige Polyole kommen prinzipiell solche zum Einsatz, wie sie in EP 140 186 beschrieben sind. Bevorzugt werden urethan- und estergruppenhaltige Polyole, zu deren Herstellung HDI, IPDI, Trimethylhexamethylendiisocyanat (TMDI) oder (H₁₂-MDI) verwendet werden. Das zahlenmittlere Molgewicht beträgt vorzugsweise 500 bis 2000 g/mol, die mittlere Funktionalität 2,0 bis 3,5.

Das Mischungsverhältnis von Vernetzer- und Polyolkomponente variiert zwischen 5 : 95 und 50 : 50 Gew.-%, bezogen auf das Gewicht der nicht flüchtigen Bestandteile, je nach gewünschtem Eigenschaftsprofil der ausgehärteten Beschichtung.

Die erfindungsgemäßen Lacke können die in der Lacktechnologie bekannte Lösemittel, z. B. Ketone, Ester oder Aromaten und Hilfsstoffe wie Stabilisatoren, Lichtschutzmittel, Katalysatoren, Verlaufsmittel oder Rheologiehilfsmittel, wie z. B. sog. "sag control agents", Mikrogele oder pyrogenes Siliciumdioxid in typischen Konzentrationen, enthalten.

Als Katalysatoren kommen insbesondere solche in Betracht, die sich auf dem Gebiet der PUR-Technologie bewährt haben, wie z. B. organische Sn(IV)-, Sn(II)-, Zn-, Bi-Verbindungen oder tert. Amine (PUR-Katalysatoren) in Mengen von 0,1 bis 2 Gew.-%.

Falls erforderlich, können auch in der Lacktechnologie übliche anorganische oder organische Farb- und/oder Effektpigmente eingearbeitet werden.

Lacke auf Basis der erfindungsgemäßen NCO-haltigen Verbindungen mit kovalent gebundenen polyedrischen oligomeren Silizium-Sauerstoffclustereinheiten als Vernetzer können lösemittelhaltig, oder lösemittelfrei sein.

Die Lacke auf Basis der erfmdungsgemäßen Verbindungen können nach bekannten Verfahren wie Spritzen, Tauchen, Walzen oder Rakeln aufgetragen werden. Dabei kann das zu beschichtende Substrat bereits mit weiteren Lackschichten versehen sein.

Geeignet sind die Lacke auch für die Verwendung als Klarlack, wobei dieser im sogenannten Nass-in-Nass-Verfahren auf eine oder mehrere Basislackschicht(en) aufgetragen wird, und diese dann gemeinsam gehärtet werden.

Die Aushärtung der erfindungsgemäßen Lacke erfolgt im Temperaturbereich 20 bis 250 °C (Objekttemperatur).

Die nachfolgenden Beispiele sollen die Erfmdung näher erläutern, ohne dass die Erfindung auf diese Ausführungsform beschränkt sein soll.

### 1. Herstellung der polyedrischen oligomeren Silizium-Sauerstoffclustereinheit

### Beispiel 1a: Synthese von (Isobutyl)₈Si₈O₁₂

Zu einer Lösung von 446 g (2,5 mol) Isobutyltrimethoxysilan (Isobutyl)Si(OMe)₃ (DYNASYLAN® IBTMO, Degussa AG) in 4300 ml Aceton wird unter Rühren eine Lösung von 6,4 g (0,11 mol) KOH in 200 ml Wasser gegeben. Das Reaktionsgemisch wird daraufhin 3 Tage bei 30 °C gerührt. Der entstehende Niederschlag wird abfiltriert und bei 70 °C im Vakuum getrocknet. Das Produkt (Isobutyl)₈Si₈O₁₂ wird in einer Ausbeute von 262 g erhalten.

### Beispiel 1b: Synthese von (Isobutyl)₇Si₇O₉(OH)₃

Bei einer Temperatur von 55 °C werden 55 g (63 mmol) (Isobutyl)₈Si₈O₁₂ in 500 ml eines Aceton-Methanol-Gemisches (Volumenverhältnis 84: 16) gegeben, welches 5,0 ml (278 mmol) H₂O und 10,0 g (437 mmol) LiOH enthält. Das Reaktionsgemisch wird daraufhin 18 h bei 55 °C gerührt und danach zu 500 ml ln Salzsäure gegeben. Nach 5 Minuten Rühren wird der erhaltene Feststoff abfiltriert und mit 100 ml Methanol gewaschen. Nach Trocknen an Luft werden 54,8 g (Isobutyl)₇Si₇O₉(OH)₃ erhalten.

### Beispiel 1c: Synthese von (3-Aminopropyl)(Isobutyl)₇Si₈O₁₂

Zu einer Lösung von 20 g (25,3 mmol) (Isobutyl)₇Si₇O₉(OH)₃ (aus Beispiel 1.b) in 20 ml Tetrahydrofuran werden bei 20 °C 4,67 g (26 mmol) 3-Aminopropyltriethoxysilan (DYNASYLAN®AMEO, Degussa AG) gegeben. Anschließend wird über Nacht gerührt. Die Reaktionslösung wird daraufhin innerhalb von 3 Minuten mit 100 ml Methanol versetzt. Nach dem Abfiltrieren und Waschen mit Methanol sowie anschließendem Trocknen werden 17 g (3-Aminopropyl)(Isobutyl)₇Si₈O₁₂ (77 % Ausbeute) als weißes Pulver erhalten.

In den Beispielen 2 und 3 sowie in Vergleichsbeispiel A kommen folgende Verbindungen zum Einsatz:
Synthalan HS 86B: Acrylatharz, Synthopol, OH-Zahl: 120 mg KOH/g, geliefert in Shellsol A/butylacetate (4:1)
VESTANAT T 1890: Cycloaliphatisches Polyisocyanat, Degussa AG, NCO-Gehalt: 17,1 %
DBTL: Dibutylzinndilaurat 10%ig in Butylacetat.
BYK 331: Verlaufsadditiv Byk Chemie

### Beispiel 2: (erfindungsgemäß) Polyurethanlackvernetzer mit kovalent gebundener polyedrischer oligomerer Silizium-Sauerstoffclustereinheit

14,9 Gew.-Teile VESTANAT T 1890/100 (Polyisocyanat auf Basis IPDI) werden in 70,8 Gew.-Teilen o-Xylol bei 40 °C gelöst und mit 0,5 Gew.-Teilen DBTL-Lsg. und 0,2 Gew.-Teilen Byk 331 versetzt. Danach werden 5,4 Gew.-Teile Silizium-Sauerstoffclustereinheit aus Beispiel 1c eingerührt. Nach wenigen Minuten ist die leicht exotherme Reaktion vollständig.

### Beispiel 3: (erfindungsgemäß) Polyurethanlackformulierung mit kovalent gebundener polyedrischer oligomerer Silizium-Sauerstoffclustereinheit

Zu dem Reaktionsprodukt aus Beispiel 2 gibt man 31,1 Gew.-Teile Synthalan HS 86B hinzu und rührt kräftig um. Mit Xylol wird eine Viskosität von 20 sec. im DIN-4-Becher eingestellt. Diese klare Lösung wird auf Bonder OC 265 (phosphatierte Stahlbleche) aufgespritzt und bei 140 °C 25 min. ausgehärtet. Die Oberfläche ist vollkommen ungestört. Der Glanzgrad (60°) beträgt 88 %.

### Vergleichsbeispiel A (Vergleich): Polyurethanlackformulierung mit nicht kovalent gebundener polyedrischer oligomerer Silizium-Sauerstoffclustereinheit

14,9 Gew.-Teile VESTANAT T 1890/100 (Polyisocyanat auf Basis IPDI) werden in 70,8 Gew.-Teilen o-Xylol bei 40 °C gelöst und mit 0,5 Gew.-Teilen DBTL-Lsg. und 0,2 Gew.-Teilen Byk 331 versetzt. Danach werden 5,4 Gew.-Teile Silizium-Sauerstoffclustereinheit aus Beispiel 1a eingerührt. Schließlich gibt man 34,5 Gew.-Teile Synthalan HS 86B hinzu und rührt kräftig um. Mit Xylol wird eine Viskosität von 20 sec. im DIN-4-Becher eingestellt. Diese immer noch leicht trübe Lösung wird auf Bonder OC 265 (phosphatierte Stahlbleche) aufgespritzt und bei 140 °C 25 min. ausgehärtet. Die Oberfläche ist stark gestört. Ein Glanzgrad kann daher nicht ermittelt werden.

Beispiel Nr. 2 und 3 zeigen im Gegensatz zum Vergleichsbeispiel Nr. A, dass sich durch eine erfindungsgemäße kovalente Anbindung der polyedrischen oligomeren Silizium-Sauerstoffclustereinheit die Verträglichkeit von Vernetzerharzen signifikant verbessern lässt und die Lackoberflächen wesentlich ungestörter sind.

## Patentansprüche

1. NCO-haltige Verbindungen mit kovalent gebundenen polyedrischen oligomeren Silizium-Sauerstoffclustereinheiten aufgebaut durch Reaktion aus den Ausgangskomponenten
A) mindestens ein aromatisches, aliphatisches und/oder cycloaliphatisches Polyisocyanat mit einer NCO-Funktionalität von 2 bis 6,
B) 0,001 bis 20,0 Gew,-% an polyedrischen oligomeren Silizium-Sauerstoffclustereinheiten mit mindestens einer gegenüber Isocyanatgruppen reaktiven funktionellen Gruppe, wobei 1 bis 20 Mol-% der ursprünglich vorhandenen freien Isocyanatgruppen des Polyisocyanates umgesetzt sind,
C) gegebenenfalls ein Blockierungsmittel, wobei 80 bis 99 Mol-% der ursprünglich vorhandenen freien Isocyanatgruppen des Polyisocyanates umgesetzt sind,
und die molaren Anteile der umgesetzten Isocyanatgruppen sich auf 100 % addieren.

2. NCO-haltige Verbindungen mit kovalent gebundenen polyedrischen oligomeren Silizium-Sauerstoffclustereinheiten nach Anspruch 1,
**dadurch gekennzeichnet,**
**dass** das Polyisocyanat A) auf den folgenden Diisocyanaten basiert:
HDI, IPDI, H₁₂-MDI, TMXDI, 1.3-H-XDI, TMDI, MPDI, NBDI, LTI, TDI, MDI und/oder NTI.

3. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die Komponente A) Polyisocyanate, erhalten durch Trimerisierung, Dimerisierung, Urethan-, Biuret- oder Allophanatbildung, allein oder in Mischungen enthält.

4. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die Komponente A) Mischungen von Polyisocyanaten und monomeren Diisocyanaten enthält.

5. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die Polyisocyanate zusätzlich kettenverlängert oder verzweigt sind.

6. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** als Komponente A) IPDI und/oder HDI und/oder deren Derivate eingesetzt werden.

7. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** als Komponente B) polyedrische oligomere Silizium-Sauerstoffclustereinheiten eingesetzt werden, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit:
a, b, c = 0-1; d = 1-2; e, f, g = 0-3; h = 1-4; m+n+o+p ≥ 4; a+b = 1; c+d = 2; e+f = 3 und g+h = 4;
R = Wasserstoffatom, Alkyl-, Cycloalkyl-, Alkenyl-, Cycloalkenyl-, Alkinyl-, Cycloalkinylgruppe oder Polymereinheit, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
X = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphin-, Polyethergruppe oder mindestens eine solche Gruppe vom Typ X aufweisenden Substituenten vom Typ R,
wobei sowohl die Substituenten vom Typ R gleich oder unterschiedlich sind als auch die Substituenten vom Typ X gleich oder unterschiedlich sind.

8. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die polyedrische oligomere Silizium-Sauerstoff-Clustereinheit funktionalisiert ist, wobei X eine funktionelle Gruppe aufweist.

9. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** mindestens einer der Substituenten vom Typ **X** eine Aminogruppe aufweist.

10. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** mindestens einer der Substituenten vom Typ **X** eine Isocyanat- oder eine blockierte Isocyanatgruppe aufweist.

11. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** mindestens einer der Substituenten vom Typ **X** eine Acrylat- oder eine Methacrylatgruppe aufweist.

12. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** mindestens einer der Substituenten vom Typ **X** eine Alkoxysilyl- oder eine Alkoxysilylalkylgruppe aufweist.

13. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** mindestens einer der Substituenten vom Typ **X** eine Epoxygruppe aufweist.

14. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** mindestens einer der Substituenten vom Typ **X** eine Hydroxygruppe aufweist.

15. NCO-haltige Verbindungen mit kovalent gebundenen polyedrischen oligomeren Silizium-Sauerstoffclustereinheiten nach mindestens einem der vorherigen Ansprüche ,
**dadurch gekennzeichnet,**
**dass** mindestens zwei der Substituenten vom Typ **X** sind.

16. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** mindestens zwei der Substituenten vom Typ **X** gleich sind.

17. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die funktionalisierte polyedrische oligomere Silizium-Sauerstoff-Clustereinheit im Wesentlichen auf der Struktur **3** 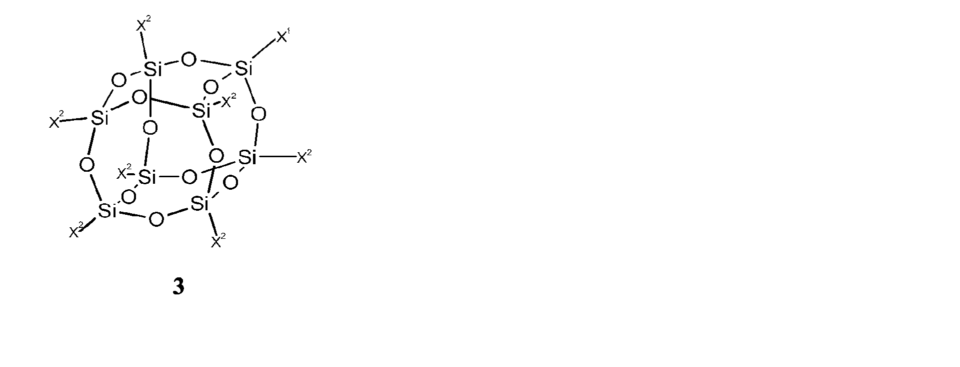 basiert,
mit **X**^{**1**} = Substituent vom Typ **X** oder vom Typ **-O-SiX**_{**3**}, **X**^{**2**} = Substituent vom Typ **X**, vom Typ **-O-SiX**_{**3**}**,** vom Typ **R**, vom Typ **-O-SiX**_{**2**}**R,** vom Typ **-O-SiXR**_{**2**} oder vom Typ **-O-SiR**_{**3**}**.**

18. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die funktionalisierte polyedrische oligomere Silizium-Sauerstoff-Clustereinheit eine funktionalisierte oligomere Silasesquioxaneinheit ist.

19. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die Silasesquioxaneinheit eine funktionalisierte homoleptische Struktur aufweist, wobei alle Substituenten vom Typ **R** gleich sind.

20. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die Silasesquioxaneinheit eine funktionalisierte heteroleptische Struktur aufweist, wobei mindestens zwei der Substituenten vom Typ **R** unterschiedlich sind.

21. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die funktionalisierte oligomere Silasesquioxaneinheit durch eine Umsetzung von Silasesquioxaneinheiten mit freien Hydroxygruppen mit monomeren funktionalisierten Silanen der Struktur **Y**_{**3**}**Si-X**^{**1**}, **Y**_{**2**}**SiX**^{**1**}**X**^{**2**} und **YSiX**^{**1**}**X**^{**2**}**X**^{**3**} erhalten wird,
wobei der Substituent Y eine Abgangsgruppe ist, ausgewählt aus Alkoxy-, Carboxy-, Halogen-, Silyloxy- oder Aminogruppe, die Substituenten **X**^{**1**}, **X**^{**2**} und **X**^{**3**} vom Typ **X** sind und gleich oder unterschiedlich sind.

22. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die funktionalisierte oligomere Silasesquioxaneinheit im Wesentlichen auf der Struktur **4, 5** oder **6** basiert,

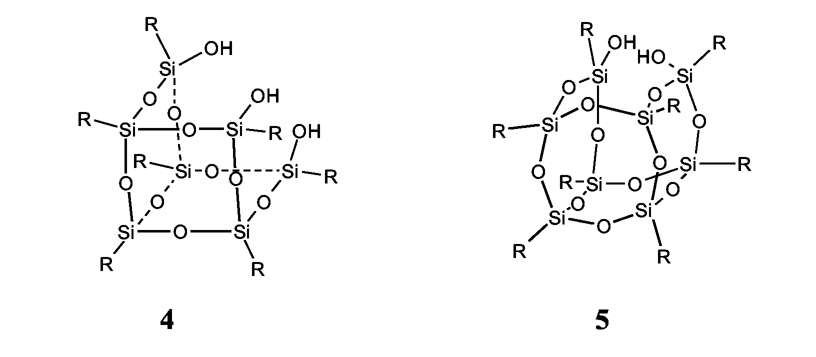

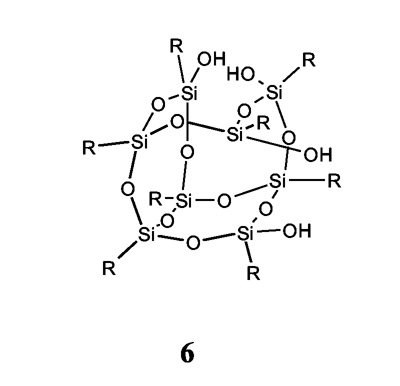

23. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die funktionalisierte oligomere Silasesquioxaneinheit im Wesentlichen auf der Struktur 7 basiert, 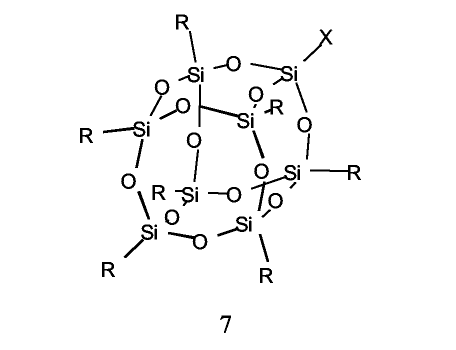 mit **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind.

24. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die polyedrische oligomere Silizium-Sauerstoff-Clustereinheit eine nicht funktionalisierte oligomere Silasesquioxaneinheit ist.

25. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die funktionalisierte polyedrische oligomere Silizium-Sauerstoff-Clustereinheit eine funktionalisierte oligomere Sphärosilikateinheit ist.

26. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** die polyedrische oligomere Silizium-Sauerstoff-Clustereinheit eine nicht funktionalisierte oligomere Sphärosilikateinheit ist.

27. NCO-haltige Verbindungen mit kovalent gebundenen polyedrischen oligomeren Silizium-Sauerstoffclustereinheiten nach mindestens einem der vorherigen Ansprüche,
**dadurch gekennzeichnet,**
**dass** als Blockierungsmittel C) Ketoxime, Aldoxime, 1,2,4-Triazole, auch in substituierter Form, Pyrazole, auch in substituierter Form, 3,5-Dimethylpyrazol, ε-Caprolactam, Malonsäureester oder Acetessigsäureester, Phenol, substituierten Phenole, sekundäre Amine, C1-C10-Monoalkohole oder Gemische dieser Blockierungsmittel eingesetzt werden.

28. Verwendung der NCO-haltigen Verbindungen mit kovalent gebundenen polyedrischen oligomeren Silizium-Sauerstoffclustereinheiten aufgebaut durch Reaktion aus den Ausgangskomponenten
A) mindestens ein aromatisches, aliphatisches und/oder cycloaliphatisches Polyisocyanat mit einer NCO-Funktionalität von 2 bis 6,
B) 0,001 bis 20,0 Gew,-% an polyedrischen oligomeren Silizium-Sauerstoffclustereinheiten mit mindestens einer gegenüber Isocyanatgruppen reaktiven funktionellen Gruppe, wobei 1 bis 20 Mol-% der ursprünglich vorhandenen freien Isocyanatgruppen des Polyisocyanates umgesetzt sind,
C) gegebenenfalls ein Blockierungsmittel, wobei 80 bis 99 Mol-% der ursprünglich vorhandenen freien Isocyanatgruppen des Polyisocyanates umgesetzt sind, und die molaren Anteile der umgesetzten Isocyanatgruppen sich auf 100 % addieren
als Vernetzter für Lacke.

29. Lacke enthaltend als Vernetzer eine NCO-haltige Verbindung mit kovalent gebundenen polyedrischen oligomeren Silizium-Sauerstoffclustereinheiten nach mindestens einem der Ansprüche 1 bis 27 und mindestens eine Polyolkomponente.

30. Lacke nach Anspruch 29,
**dadurch gekennzeichnet,**
**dass** als Polyolkomponente hydroxylgruppenhaltige Harze, ausgewählt aus hydroxylgruppenhaltigen (Meth-)acryl-Copolymerisaten, gesättigten Polyesterpolyolen, Polycarbonatdiolen, Polyetherpolyolen oder urethan- und estergruppenhaltigen Polyolen, oder Mischungen enthalten sind.

31. Lacke nach Anspruch 30,
**dadurch gekennzeichnet,**
**dass** als hydroxylgruppenhaltiges Harz (Meth-)acryl-Copolymerisate mit einem zahlenmittleren Molgewicht von 2000 bis 20000 g/mol, mit einer Glasübergangstemperatur von -40 bis +60 °C und einem Hydroxylgehalt von 30 bis 250 mg KOH/g, bezogen auf die nicht flüchtigen Bestandteile, enthalten sind.

32. Lacke nach Anspruch 31,
**dadurch gekennzeichnet,**
**dass** als hydroxylgruppenhaltiges Harz Polyesterpolyole, mit einer mittleren Funktionalität von 2,0 bis 4,0 und einem zahlenmittleren Molgewicht von 500 bis 10000 g/mol, enthalten sind.

33. Lacke nach mindestens einem der Ansprüche 30 bis 32,
**dadurch gekennzeichnet,**
**dass** das Verhältnis Polyolkomponente zu Vernetzer, bezogen auf die nichtflüchtigen Anteile, 95 : 5 bis 50 : 50 Gew.-% beträgt.

34. Lacke nach mindestens einem der Ansprüche 30 bis 33,
**dadurch gekennzeichnet,**
**dass** Hilfsstoffe enthalten sind

35. Lacke nach mindestens einem der Ansprüche 30 bis 34,
**dadurch gekennzeichnet,**
**dass** als Hilfsstoffe Stabilisatoren, Lichtschutzmittel, Katalysatoren, Verlaufsmittel, Rheologiehilfsmittel, Mikrogele, Pigmente und/oder pyrogenes Siliciumdioxid enthalten sind

36. Lacke nach mindestens einem der Ansprüche 30 bis 35,
**dadurch gekennzeichnet,**
**dass** als Katalysatoren organische Sn(IV)-, Sn(II)-, Zn-, Bi-Verbindungen oder tert. Amine (PUR-Katalysatoren) in Mengen von 0,1 - 2 Gew.-% enthalten sind.

37. Lacke nach mindestens einem der Ansprüche 30 bis 36,
**dadurch gekennzeichnet,**
**dass** Lösemittel enthalten sind.

38. Beschichtungen, hergestellt aus den Lacken nach mindestens einem der Ansprüche 30 bis 37.

39. Verwendung von NCO-haltigen Verbindungen mit kovalent gebundenen polyedrischen oligomeren Silizium-Sauerstoffclustereinheiten aufgebaut durch Reaktion aus den Ausgangskomponenten
A) mindestens ein aromatisches, aliphatisches und/oder cycloaliphatisches Polyisocyanat mit einer NCO-Funktionalität von 2 bis 6,
B) 0,001 bis 20,0 Gew,-% an polyedrischen oligomeren Silizium-Sauerstoffclustereinheiten mit mindestens einer gegenüber Isocyanatgruppen reaktiven funktionellen Gruppe, wobei 1 bis 20 Mol-% der ursprünglich vorhandenen freien Isocyanatgruppen des Polyisocyanates umgesetzt sind,
C) gegebenenfalls ein Blockierungsmittel, wobei 80 bis 99 Mol-% der ursprünglich vorhandenen freien Isocyanatgruppen des Polyisocyanates umgesetzt sind,
und die molaren Anteile der umgesetzten Isocyanatgruppen sich auf 100 % addieren, zur Herstellung von wärmehärtenden und feuchtigkeitshärtenden Lacken.

40. Verwendung von NCO-haltigen Verbindungen mit kovalent gebundenen polyedrischen oligomeren Silizium-Sauerstoffclustereinheiten aufgebaut durch Reaktion aus den Ausgangskomponenten
A) mindestens ein aromatisches, aliphatisches und/oder cycloaliphatisches Polyisocyanat mit einer NCO-Funktionalität von 2 bis 6,
B) 0,001 bis 20,0 Gew,-% an polyedrischen oligomeren Silizium-Sauerstoffclustereinheiten mit mindestens einer gegenüber Isocyanatgruppen reaktiven funktionellen Gruppe, wobei 1 bis 20 Mol-% der ursprünglich vorhandenen freien Isocyanatgruppen des Polyisocyanates umgesetzt sind,
zur Herstellung von strahlenhärtbaren Urethanacrylaten und/oder -methacrylaten.

41. Verwendung von Urethanacrylaten und/oder methacrylaten nach Anspruch 40 als Bestandteil in strahlenhärtenden, nicht pulverförmigen Formulierungen.
